(19) Europäisches Patentamt
European Patent Office
Office européen des brevets

(11) EP 1 478 245 B1

(12) EUROPEAN PATENT SPECIFICATION

(45) Date of publication and mention
of the grant of the patent:
**10.05.2006 Bulletin 2006/19**

(51) Int Cl.:
*A23L 1/218* (2006.01)    *C12N 1/20* (2006.01)
*A23B 7/10* (2006.01)     *C12N 1/20* (2006.01)
*C12R 1/225* (2006.01)

(21) Application number: **03700826.5**

(22) Date of filing: **30.01.2003**

(86) International application number:
**PCT/FI2003/000076**

(87) International publication number:
**WO 2003/063612 (07.08.2003 Gazette 2003/32)**

(54) **STARTER FOR FERMENTATION OF PLANT MATERIAL**

STARTER FÜR DIE FERMENTATION VON PFLANZENMATERIAL

AMORCEUR DE FERMENTATION POUR VEGETAUX

(84) Designated Contracting States:
**AT BE BG CH CY CZ DE DK EE ES FI FR GB GR HU IE IT LI LU MC NL PT SE SI SK TR**
Designated Extension States:
**LT LV**

(30) Priority: **30.01.2002 FI 20020174**

(43) Date of publication of application:
**24.11.2004 Bulletin 2004/48**

(73) Proprietors:
• **Maa- Ja Elintarviketalouden Tutkimuskeskus**
  **31600 Jokioinen (FI)**
• **Arktinen Bio-Lacto OY**
  **25500 Perniö (FI)**
• **Bioferme OY**
  **20760 Piispanristi (FI)**
• **Savimäki OY**
  **27130 Eurajoki as. (FI)**

(72) Inventors:
• **JOUTSJOKI, Tiina**
  **FIN-31600 Jokioinen (FI)**
• **TAMMINEN, Marja**
  **FIN-20320 Turku (FI)**
• **MÄKI, Maarit**
  **FIN-30100 Forssa (FI)**
• **VIANDER, Britta**
  **FIN-32270 Metsämaa (FI)**
• **RYHÄNEN, Eeva-Liisa**
  **FIN-00690 Helsinki (FI)**

(74) Representative: **Karvinen, Leena Maria et al**
**Oy Jalo Ant-Wuorinen Ab**
**Iso Roobertinkatu 4-6 A**
**00120 Helsinki (FI)**

(56) References cited:
• **DATABASE BIOSIS [Online] PLENGVIDHYA V. ET AL.: 'Investigation of microbial diversity and community structure in sauerkraut fermentation by nucleic acid-based detection methods', XP002966461 Database accession no. PREV200200608605 & ABSTRACTS OF THE GENERAL MEETING OF THE AMERICAN SOCIETY FOR MICROBIOLOGY vol. 102, 2002, page 365**
• **GARDNER NANCY J. ET AL.: 'Selection and characterization of mixed starter cultures for lactic acid fermentation of carrot, cabbage, beet and anion vegetable mixtures' INTERNATIONAL JOURNAL OF FOOD MICROBIOLOGY vol. 64, 2001, pages 261 - 275, XP002966462**
• **SAVARD TONY ET AL.: 'Influences des proportions de leuconostoc mesenteroides dans l'inoculum sur la fermentation d'un melange de legumes a base de carottes' SCIENCES DES ALIMENTS vol. 20, 2000, pages 603 - 610, XP002966463**
• **DATABASE FSTA [Online] OSAWA R. ET AL.: 'Isolation of tannin-degrading lactobacilli from humans and fermented foods', XP002966464 Retrieved from STN Database accession no. 2000 (11):A1729 & APPLIED AND ENVIRONMENTAL MICROBIOLOGY vol. 66, no. 7, 2000, pages 3093 - 3097**

- DE VALDEZ GRACIELA F. ET AL.: 'Lactic acid bacteria from naturally fermented vegetables' MICROBIOLOGIE - ALIMENTS - NUTRITION vol. 8, 1990, pages 175 - 179, XP002966465
- PURTSI T. ET AL.: 'Fermentation of cucumber: optimizing process technology for design and healthier foods' SPECIAL PUBLICATION - ROYAL SOCIETY OF CHEMISTRY (FUNCTIONAL FOODS II) vol. 248, 2000, pages 203 - 205, XP002966466
- PATENT ABSTRACTS OF JAPAN vol. 199, no. 708 29 August 1997 & JP 09 098 716 A (OSAKA SEIBUTSU KANKYO KAGAKU KENKYUSHO:KK) 15 April 1997

## Description

The present invention provides a starter (starter strain mixture) for fermentation of vegetables, fodder and other plant-derived material, which starter comprises lactic acid bacterial strains acting in a way similar to the natural spontaneous lactic acid fermentation. By means of the starter mixture it is possible to prepare in a controlled way fermented vegetables of good flavour and of good and uniform quality. The invention also provides a lactic acid bacterial strain being isolated from plant material and presumably having probiotic characteristics.

Commercial vegetable fermentations are still generally carried out by means of the natural microbial flora of the plant to be fermented. This substantially increases production costs, because succeeding of the fermentation may be random, and the time of processing is usually long and dependent on the initial flora and the progress of the microbial succession. From naturally fermented vegetables lactic acid bacteria have been isolated and characterised (Valdez *et al.*, 1991), and so it has already been known for a long time, which bacteria are present in fermented plant materials. These bacteria have been investigated, and efforts have been made to find out suitable starter strain mixtures (Purtsi *et al.*, 1999; Gardner *et al.*, 2001) and to optimise the mutual amounts of the strains included in such mixtures (Savard *et al.*, 2000). However, very few commercial starter bacteria strains for vegetable fermentations are available, and no Finnish strains at all. In addition, use of commercial starters is restricted because of the lack of basic information about the microbiology of such fermentations in domestic vegetable material.

Preservation of vegetables by fermentation, exploiting lactic acid bacteria, is an old method. Consumers may consider these products natural and healthy. The vitamin and mineral contents of fermented vegetables depend on the corresponding contents of the starting material. During the fermentation carbohydrates are degraded and proteins are digested by the action of organic acids, whereby the digestibility of the products is improved. Organic acids may also further the absorbance of minerals, especially iron (Eriksson, 1991). The amount of various vitamins, except thiamine, riboflavin, niacin, folic acid and $B_{12}$-vitamin, as well as K-vitamin (McFeeters, 1993) is decreased during the fermentation. Salt enhances the fermentation process, and keeps the texture of the sauerkraut solid (Sillanpää, 1984). However, abundant amount of salt is detrimental to health. It has been found in studies made using cancer cells (*in vitro*) and laboratory animals that glucosinolates and their degradation products present in cabbage plants have anticarcinogenic effects. Degradation products of glucosinolates have prevented the growth of some bacteria and yeasts (Ryhänen *et al.*, 2001).

The health-promoting activity of fermented products is apparently primarily connected with the function of intestines. The balancing effect of probiotic lactic acid bacteria to e.g. disturbed intestinal microbial flora is well known (Gorbach, 1990), and the probiotics have been supposed to decrease the serum cholesterol, improve immune response and relieve allergies. In addition, lactic acid bacteria reduce the activity of such enzymes, which activate cancer-producing compounds (Sanders 1998, Ziemer and Gibson 1998).

According to the new nutritional recommendations use of vegetables in the everyday diet should be increased. Various compounds (including dietary fibres, antioxidants and flavonoids) included in plants are believed to be of significance to health. Although probiotics are abundantly used in dairy products, and clinical evidence of their health effects exists, with vegetables produced my means of probiotic bacteria clinical tests corresponding to those made with probiotic dairy products have not been made. If fermented vegetables could be produced by means of probiotics, it would diversify the present selection of vegetables and further the increase in vegetable use.

The starter developed for fermenting plant material has characteristics, which enable fermentation similar to spontaneous lactic acid fermentation in vegetables. In the spontaneous lactic acid fermentation the fermentation is started by *Leuconostoc mesenteroides,* whose growth is prevented, when the acidity increases. The acid-tolerating *Lactobacillus plantarum* and *Lactobacillus brevis* strains survive. Fermentation occurs in liquid phase, into which the nutrients needed by the bacteria for growth are dissolved. Fluid and nutrients can be released from the plant cells by means of osmotic pressure, i.e. adding salt. Salt acts also as a preserving agent by favouring lactic acid bacteria and by preventing the growth of contaminating microbes. Fermentation occurs in anaerobic conditions, whereby the production of lactic acid is most efficient.

A starter for vegetables should meet, among others, the following requirements:

- Produces rapidly acid from available sugars
- Grows at low temperatures
- Has a positive effect on the texture, aroma and taste of the product
- Does not produce slime
- Functions well with the other bacteria in the starter
- Is biotechnically tolerant: tolerates processing, e.g. freeze-drying
- Prevents the growth of food-poisoning and contaminating microbes

The starters used today are of two different types:

- Technical starters, which have a good fermentation activity, but which do not survive in the intestines.
- Probiotic or therapeutic bacteria, which have a good fermentation activity, and which also survive in the intestines having effect on health and welfare.

The starter (starter strain mixture) according to the present invention, which is in the present invention designated as "Ferme starter strain mixture", is a mixture of three lactic acid bacterial strains, wherein the lactic acid bacteria have a synergistic effect on the characteristics of the product to be prepared. The strains included in the starter strain mixture are:

- *Pediococcus* sp. P45 (DSM 14488)(probably *Pediococcus pentosaceus*) or in place of it *Pediococcus* sp. 9/PX3 (DSM 14487)(probably *Pediococcus dextrinicus*)*:* forms acid in the beginning of fermentation
- *Leuconostoc* sp. 78 (DSM 14486)(probably *Leuconostoc mesenteroides*)*:* forms aroma and acid
- *Lactobacillus* sp. 2* (DSM 14485)(*Lactobacillus paraplantarum*): forms acid, and is apparently a probiotic strain.

When characterising the strains, they were found probably to belong to the above-mentioned species. In the following primarily the above-mentioned probable species names thereof are used.
In principle, the starter acts in a similar way independent on the plant material to be fermented and the cultivation time. The cultivation temperature should be kept in the region 18-35°C, since the strains according to the invention are mesophilic. Nutrients needed for fermentation should also be available. This is ensured in the preparation of sauerkraut and fermented cucumber by adding salt. When fermenting carrot juice or other juices the nutrients are already in the liquid.
The starter is added into the material to be fermented either as a freeze-dried powder or as pre-cultivated in vegetable juice. The fermentation is started by the homofermentative *Pediococcus pentosaceus* P45 and the heterofermentative *Leuconostoc mesenteroides* 78. The region of the pH-optimum of *P. pentosaceus* is higher than that of *Lc. mesenteroides* and *Lactobacillus paraplantarum.* Hence it produces lactic acid more effectively in the beginning of the fermentation, when pH is almost neutral. The growth of *P. pentosaceus* is prevented, when pH falls below 4, whereby the fermentation is continued by *Lc. mesenteroides* and *L. paraplantarum. Lc. mesenteroides* is an aroma former, which produces lactic and acetic acid, as well as carbon dioxide from the fermentable substrates. In addition, it produces aromatic compounds. Acetic acid is weaker acid than lactic acid, wherefore *Lc. mesenteroides* alone cannot ensure sufficiently effective lactic acid production in the beginning of the fermentation. This is ensured by means of *P. pentosaceus* which, on the other hand, does not form aromatic agents. A homofermentative acid-enduring strain *L. paraplantarum* 2* remains at the end of the fermentation as the dominant strain, which also effectively produces lactic acid. This strain is suitable for fermentation of plant material. On the other hand, it has been shown in *in vitro* conditions that it survives in human intestines and is able to attach on the intestinal surface, wherefore it apparently has probiotic characteristics.
It should be noted that the strain *Pediococcus dextrillicus* 9/PX3 may be used in the starter according to the invention instead of *Pediococcus pentosaceus* P45, but its use in the starter is restricted by its weak competitive capacity with other strains.
Consequently, the present invention relates to a culture as claimed in claim 1 and to the use of it in fermentation of plant material, i.e. vegetables, fodder and other plant-derived material, especially cucumbers.
Into the pure culture of the *Lactobacillus* sp. 2* (DSM 14485) the bacterial strain *Pediococcus pentosaceus* P45 (DSM 14488) and the strain *Leuconostoc mesenteroides* 78 (DSM 14486) may be added to form a starter adapted for use in fermentation of plant material.
In specific, the invention concerns a pure culture of the strain *Lactobacillus paraplantarum* 2* and use of this strain in a starter adapted for use in fermentation of plant material. In addition, the invention concerns a process for fermenting plant material, in which process the plant material to be fermented is contacted with the starter strain mixture according to the invention, and the plant material is fermented in room temperature for about 1 d to 14 d in anaerobic or microaerophilic conditions until achieving a desired acid content, which is dependent on the product and varies from about pH 3.5 to pH 4.5.
Use of the starter strain mixture according to the invention as a starter was found to accelerate the fermentation by enhancing development of lactic acid in the beginning of the fermentation. By means of the starter, products of good quality were obtained, the texture or taste of which were faultless. This resulted in secured lactic acid fermentation and products of uniform quality. Presumably the products also have probiotic activity: the stress tolerance and the adhesion to mucus of the strain *Lactobacillus paraplantarum* 2* were proven to be good.

**Brief Description of Drawings**

**Figures 1a and 1b.** Results of the stress tolerance tests of the bacterial strains *Lactobacillus paraplantarum* 2* and *Leuconostoc mesenteroides* 78 (1a) Tolerance of bile and pancreatic juice, and (1b) tolerance of acidity.

**Figures 2a and 2b.** Effect of starter levels on pH decrease (2a) and on titratable acidity (2b) in cucumber brines.

**Figures 3a and 3b.** Chemical analyses of fermented cucumbers. pH (3a) and titratable acidity (3b) of cucumber brines.

**Figures 4a and 4b.** Sensory evaluation profile of fermented cucumbers.

## Isolation of the lactic acid bacterial strains of the invention

*1. Lactobacillus paraplantarum* 2*:

26 lactic acid bacterial strains were isolated from spontaneous fermentation of fermented cucumbers in different phases of the fermentation. The strains were identified on the basis of a DNA test, an API test (usage of sugars) and on the basis of microscopy. Most of the isolated strains were *Lactobacillus plantarum,* in addition, a few *Lactobacillus pentosus* and *Lc. mesenteroides* strains were found. Besides these tests the strain was identified at VTT by means of ribotyping, whereby it was found that it is presumably *Lactobacillus plantarum.*
*Lactobacillus* sp. 2* was later identified as the species *Lactobacillus paraplantarum* by means of a species-specific PCR method (Torriani *et al.,* 2001). The PCR reaction gives a 107 bp product, whereas *Lactobacillus plantarum* and *Lactobacillus pentosus* give 318 and 218 bp products, respectively. The strain was deposited according to the Budapest Treaty in DSMZ depositary (Deutsche Sammlung von Mikroorganismen und Zellkulturen, GmbH) 31 August 2001 with the deposit number DSM 14485.

*2. Leuconostoc mesenteroides* 78:

Lactic acid bacterial strains were isolated from different phases of the spontaneous fermentation of sauerkraut. This strain was identified by means of a DNA test, an API test and ribotyping, and it was found that it is presumably *Leuconostoc mesenteroides.* The strain was deposited according to the Budapest Treaty in DSMZ depositary (Deutsche Sammlung von Mikroorganismen und Zelikulturen, GmbH) 31 August 2001 with the deposit number DSM 14486.

*3. Pediococcus pentosaceus* P45:

New starter strains were isolated from grass, which was preserved in bottling jars and incubated at 21, 30 and 45°C. Samples were taken after 1 and 2 days. In specific, a *P. pentosaceus* strain of our own was searched, which would replace the strain *P. pentosaceus* DSMZ 20333 used in the clinical study. Besides physiological and biochemical tests, an API test was used in the identification of the strains. We succeeded in isolating a *P. pentosaceus* P45 strain, which is well suited for vegetable fermentation, from grass, which had been incubated at 45°C. The strain was deposited according to the Budapest Treaty at DSMZ depositary (Deutsche Sammlung von Mikroorganismen und Zellkulturen, GmbH) 31 August 2001 with the deposit number DSM 14488.

*4. Pediococcus dextrinicus* 9/PX3

Lactic acid bacterial strains were isolated from different phases of spontaneous fermentation of sauerkraut. The strain was identified by means of an API test, physiological and biochemical tests and ribotyping, and it was found that it is presumably *Pediococcus dextrinicus.* The strain was deposited according to the Budapest Treaty at DSMZ depositary (Deutsche Sammlung von Mikroorganismen und Zellkulturen, GmbH) 31 August 2001 with the deposit number DSM 14487.
Results of the API test for the above-mentioned strains are depicted in Table 1. RiboPrint fingerprints confirmed the identification of the strains.

**Table 1**. Fermentation of sugars and sugar alcohols with the strains according to the invention

|  | *P. pentosaceus* P45 (anal. 15.6.2000) | *L.paraplantarum* 2* (anal. 18.8.1999) | *Lc. mesenteroides* 78 (anal. 6.9.1999) | *P. dextrinicus* 9/PX3 (anal. 11.5.2000) |
|---|---|---|---|---|
| L-arabinose | + | + | + |  |
| Ribose | + | + | + |  |
| D-xylose | + |  | + |  |

Table continued

| | P. pentosaceus P45 (anal. 15.6.2000) | L. paraplantarum 2* (anal. 18.8.1999) | Lc. mesenteroides 78 (anal. 6.9.1999) | P. dextrinicus 9/PX3 (anal. 11.5.2000) |
|---|---|---|---|---|
| Galactose | + | + | + | + |
| D-glucose | + | + | + | + |
| D-fructose | + | + | + | + |
| D-mannose | + | + | + | + |
| Mannitol | | + | | + |
| Sorbitol | | + | | + |
| α-methyl-D-glucoside | | | + | |
| N-acetyl-glucosamine | + | + | + | + |
| Amygdaline | + | + | + | |
| Arbutine | + | + | + | + |
| Esculine | + | + | + | + |
| Salicine | + | + | + | + |
| Cellobiose | + | + | + | + |
| Maltose | + | + | + | + |
| Lactose | | + | | + |
| Melibiose | | + | + | |
| Sucrose | (+) | + | + | + |
| Trehalose | + | + | + | (+) |
| Melezitose | | + | | + |
| Raffinose | | + | + | |
| β-gentiobiose | + | + | | + |
| D-turanose | | | + | + |
| D-arabitol | | + | | |
| Gluconate | (+) | + | | |

## Characterization of the strains

Suitability of the bacterial strains as probiotics was tested in *in vitro* conditions in the Universities of Helsinki (HY) and Turku (TY). *L. paraplantarum* 2* turned out to be the most resistant of the four strains tested in the stress tolerance tests. *Lc. mesenteroides* 78 showed very good resistance as well. The adherence of the strains to human intestines was tested in the University of Turku. *L. paraplantarum* 2* showed distinct adherence, whereas *Leuconostoc* sp. 78 was only slightly adherent.

## Stress tolerance

Tolerance of lactic acid bacteria to pancreatic juice and bile salts was tested in the Department of Food Technology of University of Helsinki. The strains were cultivated in MRS broth and the determinations were made in duplicate.

-    Tolerance of bile salts:

0.3% of bile salts (Merck Oxgall) were added into MRS medium

- Tolerance of pancreatic juice:

    1.9 mg/ml of pancreatine isolated from porcine pancreas were added into MRS medium.

- Tolerance of acidity:

    pH of the MRS medium was adjusted to pH 4 and to pH 2 with 37N HCl.

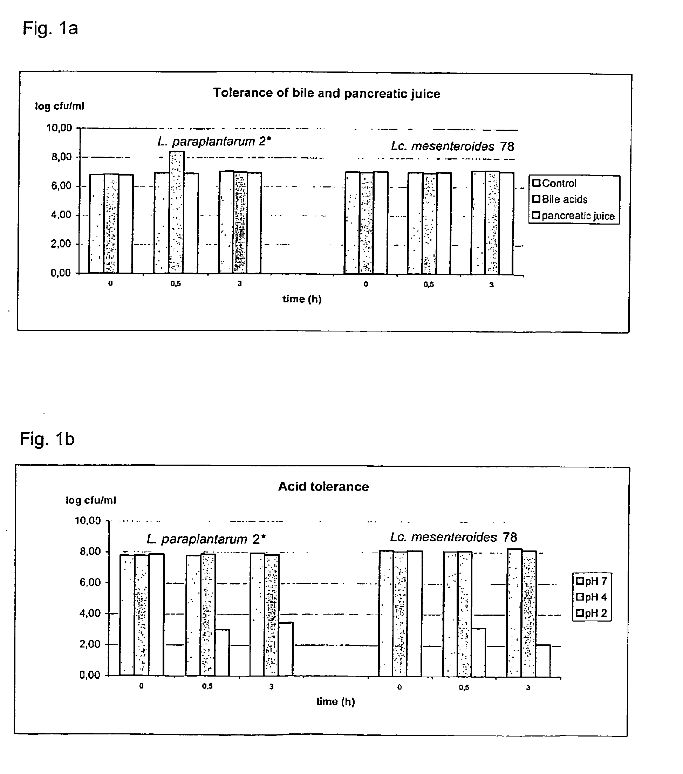

The results of the stress tolerance tests are given in Figures 1a and 1b. Both *Lc. mesenteroides* 78 and *L. paraplantarum* 2* showed good tolerance to bile salts and pancreatic juice. They survived at pH 4, but at pH 2 their number had decreased substantially, although their growth was not totally prevented.

**Adhesion**

Adhesion of the strains *L. paraplantarum* 2* and *Lc. mesenteroides* 78 to human intestinal mucus was tested in the Department of Biochemistry and Food Chemistry of University of Turku.

***In vitro* adhesion of the strains *L. mesenteroides* 78, *L paraplantarum* 2* and *L. rhamnosus* GG (comparative strain) to intestinal mucus.**

Cultivation conditions:

The bacteria were grown overnight in MRS broth (Merck, Darmstadt, Germany) at 37°C without oxygen. To metabolically label the bacteria, 10 $\mu$l of methyl-1,2[³H]thymidine (6.7 Ci.mmol⁻¹; Nen products) was added per ml of growth medium. The bacteria were harvested by centrifugation (1000 x g), washed with HEPES (*N*-2-hydroxy-ethylpiperazine-*N'*-2-ethanesulphonic acid)-Hank-buffer (HH; 10mM HEPES; pH 7.4), and resuspended in HH-buffer. The absorbance at 600 nm was adjusted to 0.25 $\pm$ 0.01, and diluted then 10-fold in HH buffer (about $10^7$ CFU/ml) in order to avoid substrate saturation (Tuomola and Salminen, 1998).

Mucus was prepared from the healthy part of human colon, as earlier described (Ouwehand and Conway, 1996). Briefly, immediately after the resection the colon was placed on ice, and it was used within 20 minutes. The piece of colon was cut open and gently washed in HH buffer. The mucus was scratched out with a rubber spatula and centrifuged twice in order to remove particulate material. The mucus was stored at -70°C until use.

For the adhesion study (Ouwehand *et al.,* 1999) the mucus was diluted into protein concentration of 0.5 mg.ml⁻¹ and passively immobilised on microtitre plate wells by overnight incubation at 4°C. Excess mucus was washed out with HH buffer and the radioactively labelled bacteria were added into four parallel wells. The bacteria were incubated at 37°C and after 60 minutes the wells were washed to remove the non-adhered bacteria. The adhered bacteria were released and lysed by incubation with 1% SDS in 1M NaOH at 60°C for 60 min. Adhesion is expressed as percentages: radioactivity recovered from the wells compared to radioactivity added to the wells. For the determination mucus of three individuals was used, and the determinations were made at least in triplicate.

**Table 2**. Results of the adhesion test.

| | 1 | | | 2 | | | 3 | | | 4 | | | avg | SD |
|---|---|---|---|---|---|---|---|---|---|---|---|---|---|---|
| *L. para- plantarum* | 13.86 | 16.27 | | 17.08 | 9.43 | 15.94 | 13.40 | | | | | | 14.33 | 2.79 |
| *2* Lc. mesen-* | | | | 3.15 | 3.29 | 3.23 | 3.70 | 3.24 | 3.22 | 3.76 | 4.05 | 4.13 | 3.53 | 0.39 |
| *teroides* 78 *L GG* | 38.11 | 34.13 | 34.50 | 38.66 | 32.24 | 35.36 | 36.63 | 31.58 | 24.19 | 35.34 | 37.71 | 45.15 | 35.30 | 4.98 |

**Studies of the characteristics of the products prepared with the starter mixture of the invention, and of the suitability of the strains for fermentation**

**CLINICAL STUDY**

Health effects of the products prepared with a starter strain mixture containing the bacterial strain according to the invention, *Lactobacillus paraplantarum* 2*, were studied at the Department of Clinical Nutrition of University of Kuopio. Nutritional characteristics and health effects of the fermented vegetables were examined in the study. The study was supposed to reveal, whether the vegetables fermented with probiotic bacterial strains produce more health-promoting effects than products prepared by ordinary fermentation. No corresponding clinical studies have been made concerning adding probiotic bacterial strains to vegetables. The results are currently being processed.

The research gives new information about health effects of fermented vegetables. In addition, the health effects of products fermented with conventional methods and those fermented with probiotic bacterial strains may be compared to diets not containing such products.

Four products were used in the clinical study: sauerkraut, sauerkraut juice, grated swede and carrot juice, which were prepared in two phases. For all products to be tested a corresponding control product was prepared. The products to be tested are called below as "probiotic" products.

**Preparation of the products for the clinical study**

**Cultivation of the starter strains in carrot juice**

Carrot juice was pressed and transferred to a freeze store of -20°C. The juice was thawed overnight at a refrigerator temperature and autoclaved at 121°C for 20 min. pH of the juice was 5.42. Growth of the following strains in carrot juice was monitored in the test:

*Lc. mesenteroides* 78
*L. paraplantarum* 2*
*Leuconostoc* 1*
*P. pentosaceus* DSMZ 20333

The strains were passaged overnight in MRS broth at 30°C and inoculated with 1% inoculum into carrot juice. The juices were fermented for 21 h at 30°C. pH of the juices were measured and the lactic acid bacterial counts were determined on MRS medium both from the strains cultivated in MRS broth and those cultivated in carrot juice (Table 3). The juices were packed into bottles. The juices were used for preparing the grated swede for the clinical study. The grated swede was fermented with a starter strain mixture containing L *paraplantarum 2*, Lc. mesenteroides* 78 and *P. pentosaceus* DSMZ 20333.

**Table 3.** Number of lactic acid bacteria in carrot juice and in MRS-broth

| Strain | pH in carrot juice | cfulml in MRS-broth | cfu/ml in carrot juice |
|---|---|---|---|
| *Lc. mesenteroides* 78 | 3.69 | $1.17 \times 10^9$ | $2.11 \times 10^9$ |
| *L. paraplantarum* 2* | 3.70 | $2.18 \times 10^9$ | $2.05 \times 10^9$ |
| *Leuconostoc* 1* | 3.68 | $1.12 \times 10^9$ | $3.70 \times 10^9$ |
| *P. pentosaceus* DSMZ 20333 | 3.97 | $3.19 \times 10^9$ | $3.34 \times 10^9$ |

Subsequently, the activity of the strains cultivated in carrot juice inoculum was tested by correspondingly inoculating 1% of an inoculum to autoclaved carrot juice. The starters used in the clinical study were selected for the experiment. (Table 4). The strains were grown at 30°C for 18.5 h.

**Table 4**. Number of lactic acid bacteria in carrot juice

| Strain | pH in carrot juice | cfu/ml in carrot juice |
|---|---|---|
| *Lc. mesenteroides* 78 | 3.86 | $1.66 \times 10^9$ |
| *L. paraplantarum* 2* | 3.87 | $2.06 \times 10^8$ |
| *P. pentosaceus* DSMZ 20333 | 4.38 | $8.55 \times 10^8$ |

*Sauerkraut*

Sauerkraut was prepared and packed into 100 g sachets in 20% carbon dioxide protecting gas for the first and for the second intervention at different times. As an additive 1% PVD vacuum salt + E535, Saltunion, Algol, was used. In addition, 1% of starter cultivated in carrot juice was added into the probiotic sauerkraut. The starter was a mixture of three strains: *L. paraplantarum 2\*, Pediococcus pentosaceus* DSMZ 20333, *Lc. mesenteroides* 78.

*Sauerkraut juice*

Was prepared by expressing from the above sauerkraut batch. The juice was packed into 2 dl cartons for the first intervention. 27% of carrot juice was added into the control sauerkraut juice before packing. *L. paraplantarum* 2* strain was added into the probiotic sauerkraut juice, so that 1.2 litres were added as a concentrate, and about 6 l as fermented carrot juice. The concentrate had been prepared by centrifuging carrot juice fermented by an inoculum *of L. paraplantarum* 2*. In addition, 2.5 litres of non-fermented carrot juice were added. Altogether, 20% of carrot juice was added. The probiotic juice became very sour, whereas the control juice was milder.

The control sauerkraut juice was stored in 10 l plastic canisters in a cold store at +5°C for the second intervention. A precipitate had gathered at the bottom of the bottle, and care was taken not to blend the precipitate into the juice. A day before packing 25% of fresh carrot juice was added into the juice. The probiotic sauerkraut juice was stored at -25°C and thawed in a cold store for 2 d. The precipitate gathered at the bottom was not totally mixed with the juice. A day before packing 25% of fresh carrot juice was added into the juice. In addition, just before packing about 1 litre of the strain *L. paraplantarum* 2* grown in carrot juice was added as a concentrate. The juices were packed.

*Grated swede*

The grated swede was prepared separately for both of the interventions. The grate was fermented in brine so that into 60 kg of grate 60 litres of seasoned brine was added. While packing, the brine was run apart and about 5 g of it was added at the bottom of the bag. The grates were packed under 20% carbon dioxide protection gas. Raw materials included swede, carrot and onion in proportions 4:1:0.1, and the spices: fructose, anise, fennel, caraway, coriander, chives, marine salt (the broth included 1% of salt). The control grate was prepared by adding a "wild strain inoculum" or a mixed starter prepared from sauerkraut juice. The probiotic grate had been prepared by adding 1% of the mixture of the three strains, in a way similar to that used in preparing sauerkraut. Raw materials were swede, carrot and onion + leek in proportions 1:1:0.2 and the spices fructose, anise, herbs de provence and marine salt (the broth included 1% of salt).

*Carrot juice*

Carrot juice was prepared separately for both of the interventions. The starters were the same as in preparing the grated swede. The strain *L. paraplantarum* 2* was added to the probiotic juice as a concentrate. The acidity of the carrot juice was adjusted by adding ordinary carrot juice. The juice was packed into 2 dl cartons.

Chemical analyses of the products were made in the chemical laboratory of MTT. The analyses were carried out separately for both of the test phases, since the products had been prepared using different raw material batches. Microbiological analyses for the products were carried out in the Laboratory of Food Chemistry and Technology of MTT in the beginning and at the end of the test phases (Tables 5 and 6).

**Table 5**. D- and L-lactic acid concentrations, and numbers of lactic acid bacteria in test products.

| Product | Phase | Lactic acid | | | Lactic acid bacteria cfu/ml | |
|---|---|---|---|---|---|---|
| | | cD (g/l) | cL (g/l) | tot. g/l | beginning | end |
| Grated swede A control | 1.a. | | | | $4 \times 10^6$ | $8 \times 10^5$ |
| | 1.b. | | | | $6 \times 10^8$ | |
| | 2. | 2.9 | 2.9 | 5.8 | $5 \times 10^6$ | $2 \times 10^5$ |
| Grated swede B prob. | 1.a | | | | <100000 | $6 \times 10^4$ |
| | 1.b | | | | $2 \times 10^9$ | |
| | 2. | 2.5 | 2.5 | 5.0 | $4 \times 10^5$ | $6 \times 10^3$ |
| Sauerkraut A control | 1.a. | 12.6 | 8.6 | 21.2 | <100000 | $3 \times 10^2$ |
| | 2. | | | | $6 \times 10^6$ | <10 |
| Sauerkraut B prob. | 1.a | 11.7 | 4.2 | 15.9 | <100000 | $2 \times 10^2$ |
| | 2. | | | | < 10 | <10 |

Table continued

| Product | Phase | Lactic acid | | | Lactic acid bacteria cfu/ml | |
|---|---|---|---|---|---|---|
| | | cD (g/l) | cL (g/l) | tot. g/l | beginning | end |
| Carrot juice control | 1.a. | 3.5 | 3.2 | 6.7 | $5 \times 10^8$ | $3 \times 10^8$ |
| | 1.b. | | | | $1 \times 10^9$ | $3 \times 10^7$ |
| | 2. | 3.5 | 4.1 | 7.6 | $6 \times 10^8$ | $3 \times 10^4$ |
| Carrot juice prob. | 1.a. | 2.9 | 2.4 | 5.3 | $6 \times 10^8$ | $5 \times 10^8$ |
| | 1.b. | | | | $8 \times 10^7$ | $5 \times 10^7$ |
| | 2. | 3.1 | 2.9 | 6.0 | $2 \times 10^9$ | $3 \times 10^5$ |
| Sauerkraut juice control | 1.a. | 6.7 | 5 | 11.7 | $1 \times 10^8$ | <100000 |
| | 1.b. | | | | $7 \times 10^5$ | $6 \times 10^5$ |
| | 2. | 7.5 | 4.8 | 12.3 | $6 \times 10^6$ | 90 |
| Sauerkraut juice prob. | 1.a. | 10.3 | 3.6 | 13.9 | $6 \times 10^7$ | <100 000 |
| | 1.b. | | | | $5 \times 10^7$ | $1 \times 10^5$ |
| | 2. | 8.8 | 3.3 | 12.1 | $2 \times 10^7$ | 30 |

40 individuals of the test subjects announced to the clinical study were invited into an interview, 25 of which were selected for the study. 22 test subjects kept up in the study from beginning to the end. The study lasted for four months. After a 2-week basic period there was a 4-week intervention, a 4-week recovery period and a 4-week intervention. Samples were taken thrice. The test subjects kept food diary for three days, and they also replied to an inquiry of exercise habits.

The test products were grated swede and sauerkraut, as well as carrot juice and sauerkraut juice. The test subjects obtained their weekly portions frozen, and they took 2 dl of juice and 100 g of grate daily. The test subjects were allowed to decide themselves, in which order they took the products.

**Table 6**. Chemical composition of the products.

| Product | Phase | total sugar | carbohydrates | energy | g/100 g fw | | nitrate | B1-vit | C-vit |
|---|---|---|---|---|---|---|---|---|---|
| | | % fw | g/kg fw | kJ/100 g fw | moisture | ashes | mg/kg | mg/kg | mg/kg |
| Carrot juice control | 1. | 5.5 | 6.46 | 134 | 92.2 | 0.39 | 2.6 | 0.4 | 2.6 |
| | 2. | 3.4 | 6.2 | 121 | 92.7 | 0.33 | 4.7 | 0.3 | 1.1 |
| Carrot juice probiotic | 1. | 4.3 | 6.08 | 123 | 92.7 | 0.37 | 4.4 | 0.4 | 2.8 |
| | 2. | 3.7 | 6.3 | 124 | 92.5 | 0.36 | 4.8 | 0.3 | 1.4 |
| Sauerkraut juice control | 1. | 2.2 | 2.83 | 87 | 94.3 | 1.25 | 3.8 | 0.6 | 28.0 |
| | 2. | 1.1 | 2.4 | 62 | 95.2 | 1.23 | 4.6 | 0.6 | 24.8 |
| Sauerkraut juice probiotic | 1. | 2.8 | 3.83 | 90 | 93.6 | 1.25 | 3.8 | 0.7 | 29.5 |
| | 2. | 1.6 | 3.7 | 83 | 94 | 1.15 | 4.7 | 0.6 | 20.1 |
| Grated swede A control | 1. | 2.2 | 5.09 | 113 | 93.4 | 0.51 | 71.4 | 0.2 | 1.7 |
| | 2. | 0.9 | 4.1 | 84 | 94.6 | 0.64 | 24.9 | | 1.8 |
| Grated swede B probiotic | 1. | 2 | 5.07 | 98 | 93.8 | 0.54 | 34.7 | 0.2 | 1.9 |
| | 2. | 0.9 | 3.8 | 79 | 95 | 0.55 | 27.3 | | 2.1 |

Table continued

| Product | Phase | total sugar | carbohydrates | energy | g/100 g fw | | nitrate | B1-vit | C-vit |
|---|---|---|---|---|---|---|---|---|---|
| | | % fw | g/kg fw | kJ/100 g fw | moisture | ashes | mg/kg | mg/kg | mg/kg |
| Sauerkraut A control | 1. | 1.5 | 5.72 | 127 | 91 | 1.7 | | 0.6 | 46.7 |
| | 2. | 0.9 | 5.4 | 122 | 91.3 | 1.69 | 141.0 | 0.6 | 40.9 |
| Sauerkraut B probiotic | 1. | 2.8 | 7.15 | 152 | 89.3 | 1.89 | | 0.6 | 46.5 |
| | 2. | 2.4 | 6.4 | 138 | 90.1 | 1.94 | 167.0 | 0.6 | 46.6 |

The test subjects assessed the sensory characteristics of the carrot juice and grated swede in the beginning and at the end of the study. A first evaluation was made of a fresh product and the latter of a frozen same product. The grated swede, which had been prepared using the starter, the probiotic characteristics of which were examined, was somewhat more pleasing than the control grate, although there was no statistical difference between them. In the latter evaluation time there was no difference between the characteristics. The general acceptance of the fresh carrot juice prepared with the probiotic starter was significantly better than that of the control juice. In the latter evaluation time there was no difference. At both times the evaluation grades were at the same level.

The test subjects gave mostly positive feedback for the products. However, the sauerkraut juice was, especially in the first phase, very sour, and the test subjects took it as diluted. When packing, carrot juice had been added into the sauerkraut juice, but it did not sufficiently decrease the acidity. The carrot juice of the latter phase had a little bitterness, but the test subjects did not complain of that. Caraway added into the grated swede was a strange spice for the test subjects from eastern Finland, and it was found a little peculiar.

Chemical analyses of the products were made in the chemical laboratory of MTT. The analyses were carried out separately for both of the test phases, since the products had been prepared using different raw material batches. Microbiological analyses for the products were carried out in the Laboratory of Food Chemistry and Technology of MTT in the beginning and at the end of the test phases.

No statistical differences in the cholesterol values of the test subjects could be found, although the mean value decreased a little. The cholesterol values of all of the test subjects were good, and it was difficult to find any changes. According to the results the HDL level did not change, whereas the LDL level decreased a little. In small blood picture no statistically significant changes between the groups could be found, and all of the test subjects were healthy. $\beta$-carotene level increased statistically significantly in both of the groups, and a little more in the probiotic group. There was no difference between the control and probiotic groups in the total bacterial count or lactic acid bacterial count. In each of the test subjects it was found that in May the total bacterial count had decreased and the lactic acid bacterial count had increased. This may be due to both environmental factors and differences in the raw materials of the products.

According to the results the amount of cresols causing skin cancer and possibly also intestinal cancer, decreased both in the control and in the probiotic group. There was no difference between the groups. At the end of the second test phase the amount of the cresols had strongly decreased. The order, in which the test was started, had no effect on the cresol amounts. The amounts of phenols did not show statistical differences between the groups, although the level in the probiotic group was a little lower. The amount of phenols decreased at the end of the second test phase in the same way as the amount of cresols. There were no differences in the $\beta$-glucuronidase levels between the groups. In future it will be studied, if the changes in the cresol and phenol amounts could be explained by the levels of the bacterial counts. The analysis of the results is still going on. Taking the products during the test phases did not show any harmful effects to health.

**Isolation and identification of lactic acid bacteria at the MTT Food Reseach in connection with the clinical study.**

The MRS plates cultivated of the faeces samples in Kuopio had been sent to the MTT Food Research by mail, and colonies were isolated and purified from the dishes. Totally 110 samples were sent, and from each of the samples 3-7 different colonies were collected. Purified strains amounted to 334, 93 of which turned out to be *L. plantarum* strains. Before the test phase only from one sample one *L. plantarum* strain could be isolated. During the first test phase the amount of the *L. plantarum* strains isolated from the faeces increased up to thirty. Also during the second phase the amounts kept higher compared to the initial level. In the future it will be examined if there were differences between the probiotic and the control groups. In addition, it will be examined if the strains can be identified as the strain *L. paraplantarum 2 \**, added as a probiotic.

## TESTS FOR PRESERVING CUCUMBERS

In the Bioproduction Unit of University of Turku freeze-dried starter had been produced out of the strains *L. paraplantarum* 2\* and *Lc. mesenteroides* 78 used in the clinical study, and the strain *P. pentosaceus* P45 isolated in June. The suitability of the mixture containing these three strains (Ferme starter strain mixture) in preparing fermented cucumber was tested in the preliminary test carried out in June, and in the actual tests carried out in July-August. Tests were carried out both in laboratory and in practical scale. Cucumbers for the tests were obtained from MTT/Horticultural Research in Piikkiö, where the variety Crispina had been cultured for this test.

The cucumbers were preserved in aluminium bags, bottling jars and Ilves-jars. The aim was to avoid the access of air to the containers during the preservation. The fermentation was monitored by means of pH measurements and titratable acidity. Microbial determinations were made in the beginning and at the end of the fermentation.

## Methods

### Microbiological methods

Dilution water: Ringer solution, strength ¼ (Merck), sterilisation in autoclave at 120°C for 20 min, divided into sterile test tubes à 9 ml.

Coliformic enterobacteria: VRB-agar (Biokar Diagnostics BK 086), 0.1% of glucose was added, poured plates, pouring a layer of the medium on the surface, incubation at 30°C for 2 d.

Lactic acid bacteria: MRS-agar (Bacto Lactobacilli MRS broth, Difco 0881-15-5, 1.5% agar), streaked plates, anaerobic incubation for 3 d at 30°C.

Yeasts and moulds: YGC-agar (Difco 1900-17, Bacto yeast extract glucose chloramphenicol agar), streaked plates, incubation at 30°C for 3 d.

### Chemical methods

1. pH: pH-meter Orion 720A, combination electrode Ross 8102SC. Samples of about 5 ml were taken into a test tube.
2. Titratable acidity: 10 g of a sample was weighed into an erlenmeyer, titrated with 0.1 N NaOH (Titrisol), indicator 1% fenolftalein in ethanol (cf. Valion menetelmäopas, p. 13).

Calculating the results:  Lactic acid g/l  =

$$\frac{(NaOH\ consumption\ ml \times equivalent\ concentration\ of\ NaOH\ mol/l \times 0.09\ g/mol) \times 1000}{ml\ of\ sample}$$

The cucumber brine samples were weighed, since the brine always contained a precipitate, which obstructed the pipette. 10 ml of brine weighed 10 g.

3. Salt concentration: According to the book "Valion menetelmäopas" p. 32 (IDF 12A:1969). 100 ml of boiling distilled water was added to 5 g of sample, titrated at 50-55°C with 0.1N silver nitrate, 5% of potassium chromate was added as an indicator.

Calculation of results: Salt concentration (NaCl %) =

$$\frac{(5.85 \times titration\ solution\ N \times (consumption\ of\ sample - zero\ sample\ .\ consumption\ ml)}{sample\ weight\ g}$$

**Statistical methods**

Statistical differences were calculated with unidirectional variance analysis separately for each sampling time. Mean values for the treatments were calculated as least square means and deviations as standard error of means (s.e.m.). Mean values were compared in pairs by the means of contrasts. Statistical analyses were calculated using the SAS/STAT program, version 8.1. (SAS Institute Inc., Cary, NC, USA). Statistical analysis of sensory evaluation is described separately.

**Cultivation of the strains in cucumber brine**

Growth of the starter strains was compared in MRS broth and cucumber brine. The strains tested were:

1. *L. paraplantarum* 2*
2. *Lc. mesenteroides* 78
3. *P. dextrinicus* 9/PX3 (Abbreviation P9/PX3)
4. *P. pentosaceus* DSMZ 20333 (Abbreviation DSMZ)
5. *P. pentosaceus* P45 (Abbreviation P45)

pH and titratable acidity of the broths were examined.

Table 7. pH and titratable acidity in MRS-broth and cucumber brine 1 d 30°C.

| Sample | Medium | pH | Titratable acidity (lactic acid mg/ml) |
|---|---|---|---|
| Control | MRS-broth | 6.08 | |
| Control | Cucumber brine | 5.33 | 1.2 |
| *L. paraplantarum* 2* | MRS-broth | 4.00 | |
| *L. paraplantarum* 2* | Cucumber brine | 3.94 | 4.0 |
| P45 | MRS-broth | 4.00 | |
| P45 | Cucumber brine | 4.20 | 2.5 |
| P9/PX3 | MRS-broth | 4.32 | |
| P9/PX3 | Cucumber brine | 5.27 | 1.1 |
| *Lc. mesenteroides* 78 | MRS-broth | 4.44 | |
| *Lc. mesenteroides* 78 | Cucumber brine | 3.87 | 7.6 |

**Actual tests**

1. *Comparison to the control and to a commercial starter*

The cucumbers (variety Crispina) were preserved one-by-one in aluminium bags and in 1 l bottling jars. Suitability of the aluminium bags had been tested in the preliminary tests. On the basis of the preliminary test *Pediococcus* sp. P45 was selected to the starter strain mixture. Ferme starter strain mixture was compared to the control and to the starter Bioprofit (Valio Oy). Bioprofit consists of *Lactobacillus rhamnosus* and *Propionibacterium freudenreichii* strains. The starter is used as a protective culture in milk products and as a starter for ensilage.

Brine was added as the amount of the weight of the cucumbers. The brine was prepared of marine salt by boiling and cooling to room temperature. Salt concentration was 3%. Results were statistically compared by means of contrasts (F-test).

Ferme starter strain mixture decreased pH statistically significantly more effectively, and produced lactic acid more effectively after 3 d preservation compared to the control (Table 8). pH of the control cucumbers had decreased almost to the same level within 5 d and the lactic acid amounts were almost the same as in the cucumbers preserved with the starter strain mixture (Table 9).

**Table 8.** pH-decrease of the cucumber brines during the preservation (n = 5 or 6).

| Treatments /day | 0 | 1 | 2 | 3 | 5 | 6 | 8 | 11 | 13 | 18 |
|---|---|---|---|---|---|---|---|---|---|---|
| Control | 7.94 | 5.66 | 5.06 | 4.07 | 3.76 | 3.74 | 3.57 | | | |
| Starter strain mixture | 7.43 | 4.68 | 4.13 | 3.83 | 3.65 | 3.62 | 3.48 | 3.43 | 3.27 | 3.33 |
| Pr > F | | <0.0001 | 0.0001 | <0.0001 | 0.0058 | 0.0011 | 0.0112 | | | |

**Table 9**. Titratable acidity of the cucumber brines (lactic acid mg/ml) during the preservation (n = 5 or 6)

| Treatments /day | 2 | 3 | 5 | 6 | 8 | 11 | 13 | 18 |
|---|---|---|---|---|---|---|---|---|
| Control | 0.80 | 1.76 | 3.46 | 4.59 | 6.09 | | | |
| Starter strain mixture | 1.01 | 2.24 | 3.92 | 4.86 | 6.33 | 7.44 | 8.16 | 8.33 |
| Pr > F | 0.2418 | 0.0018 | 0.1202 | 0.3693 | 0.2744 | | | |

*2. Comparing the dosage levels of the starter*

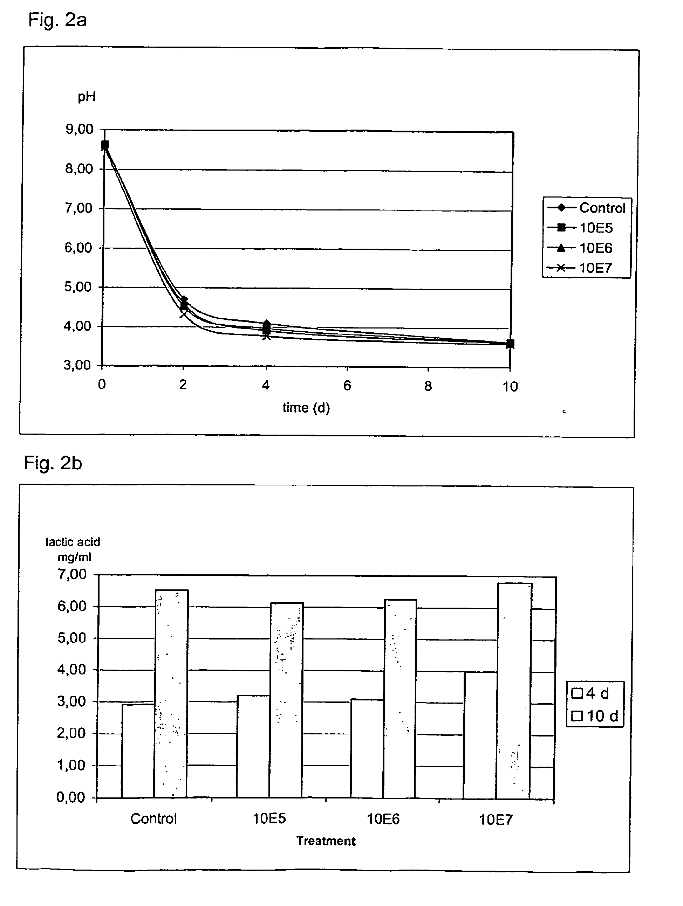

In the test the effect of dosage levels of a freeze-dried starter prepared of Ferme starter strain mixture to the fermentation rate was compared. The starter was added in proportions 1:1:1 in three different levels $10^5$, $10^6$, $10^7$ cfu/ml. The fermentation rate was compared to that of the control prepared without the starter. The brine was prepared of marine salt (3%) by cooking into tap water. Water was cooled to room temperature. Cucumbers, which were of the variety Crispina, had been picked up and brought on the previous day from Piikkiö from a field cultured for the test. The cucumbers were stored overnight in a cold store and washed with a scrubbing-brush, rinsed thoroughly and weighed into aluminium bags. A same amount of brine, with which the starter had been mixed, was added into the bags. There were three sampling times, and 5 parallel samples were reserved for each sampling time. Weight of the cucumbers varied from 31 g to 66 g. The samples were incubated in the fermentation room at 21°C and the samples were taken after 2, 4 and 10 days. pH was measured separately from each of the cucumber juices, and the titratable acidity from a pooled sample. The statistical differences of the pH results and weight of the cucumbers were analysed by variance analysis, and the differences were examined by means of contrasts. There were no statistically significant differences in the weights of the cucumbers. According to the variance analysis the pH of the cucumbers did not show significant differences after two days, but analysed by means of contrasts, at the starter level of $10^7$ cfu/ml it was possible to decrease pH significantly more effectively (P=0.0134) compared to the control. At the starter level of $10^5$ cfu/ml, pH did not decrease more efficiently after 4 days compared to the control, whereas at the starter levels of $10^6$ and $10^7$ cfu/ml the difference was significant (P=0.0144 and P=0.0002, respectively). The starter level $10^7$ cfu/ml was significantly more effective than $10^6$ cfu/ml (P=0.0112). After 10 days the starter and the control did not show statistically significant differences. The results are given in Figures 2a and 2b.

According to the results the dosage of the freeze-dried starter in the brine has to be on the level of $10^7$ cfu/ml, if it is desirable to accelerate the fermentation of cucumbers in the beginning of the preservation.

*3. Comparison of a freeze-dried and a fresh starter*

In the experiments the fermentation activities of freeze-dried and fresh starters were compared. In the first experiment, which was later subjected to sensory evaluation (see below), the control (brine + 1% cucumber juice), a 1% starter strain mixture 1:1:1 (g) grown overnight in sterile (autoclaving at 120°C, for 20 min) cucumber juice (the strains had been grown separately), and $10^7$ cfu/ml freeze-dried 1:1:1 (cfu/g) starter strain mixture.

The freeze-dried starter had been prepared in the Bioproduction Unit of University of Turku. The amount of the starter was calculated so that the brine would include an inoculum of $10^7$ cfu/ml (Table 10). The freeze-died starter was first diluted in 200 ml of water, and 1800 ml of brine was added thereto. The final concentration in the brine was numerically (200 ml x 1.05 x $10^8$ cfu/ml)/2000ml=1.05 x $10^7$ cfu/ml.

Table 10. Number of colonies of the starters, and concentrations added into the brine.

| Strain | Concentration in the powder cfu/g | Weighed g | Calculatory concentration cfu/ml | Number of colonies cfu/ml |
|---|---|---|---|---|
| Freeze-dried starter: | | | | |
| *Lc. mesenteroides* 78 | $7.5 \times 10^{10}$ | 0.094 | $3.71 \times 10^7$ | |
| *L. paraplantarum* 2* | $2.5 \times 10^{10}$ | 0.270 | $3.38 \times 10^7$ | |
| *P. pentosaceus* P45 | $1.5 \times 10^{10}$ | 0.488 | $3.36 \times 10^7$ | |
| Together | | | $1.05 \times 10^8$ | $2.7 \times 10^6$ |
| Fresh starter | | | | $3.1 \times 10^6$ |
| Control | | | | > 3000 |

The cucumbers (variety Crispina) had been brought from Piikkiö, stored overnight in a cold store, washed on the next day and stored in water in a cold store. The brine was prepared by cooking marine salt (3%) in tap water. The cucumbers 5-6 pieces (about 400 g) were weighed into aluminium bags, wherein a same amount of brine was added. The starter had been dissolved in brine. Air was removed as carefully as possible, and the bag was closed with a heat sealer. A sample was taken from the brines into 100 ml plastic bottle for colony determination, and it was analysed next day. The cucumbers were incubated in the fermentation room at 21°C for 16 days and placed into a cold store at 5°C. pH and titratable acidity of the cucumbers were measured after 6 days (Table 11). The control cucumbers had produced gas and the bags were very distended. The cucumbers preserved with the freeze-dried starter were distended as well, whereas those preserved with the fresh starter were distended only a little.

Table 11. Comparison of fresh and freeze-dried starter. Preservation time 6 d.

| Treatment | pH | Titratable acidity (lactic acid mg/ml) |
|---|---|---|
| Control | 3.75 | 4.36 |
| Fresh starter | 3.48 | 5.56 |
| Freeze-dried starter | 3.44 | 6.21 |

*4. Comparison of the starter and the control in 4 l bottling jars*

In the experiment the effect of the starter to a control preserved without a starter in 4 l bottling jars (Ilves jars) was compared. The cucumbers were picked up and brought the next day to Jokioinen. The cucumbers were washed and stored in water in a cold store at 5°C. Cucumbers weighing 75-125 g were selected for the experiment. The experiment was carried out in two parallel jars. The brine (3%) was prepared of marine salt (Meira) by cooking and cooling into room temperature (16.6°C). The starter was added as a freeze-dried powder into the brine (Table 12). The jars were filled with cucumbers (mean 1.925 kg) and brine was added so much that no air was left under the intermediate cap (mean 1.647 kg). The colony number of the brine was determined on the same day on MRS medium. The cucumbers were incubated for 18 d at 21°C in an incubation room. Samples of the cucumber brine were taken with a scale pipette, 50 ml from the surface and from the bottom. pH, titratable acidity, lactic acid bacteria, coliform enterobacteria, as well as yeasts and moulds were determined from the cucumbers (Table 13).

Table 12. Number of starter bacteria.

| Strain | Weighed g | Calculatory amount in brine cfu/ml |
|---|---|---|
| *Lc. mesenteroides* 78 | 0.99 | $1.24 \times 10^7$ |
| *L. paraplantarum* 2* | 1.01 | $0.42 \times 10^7$ |
| *P. pentosacens* P45 | 0.99 | $0.25 \times 10^7$ |
| Altogether | | $1.91 \times 10^7$ |
| Cultivation on MRS medium* | | $2.56 \times 10^7$ |

Table 13. Acidity and number of bacteria in cucumbers after 18 days of incubation (mean, n = 2).

| | pH | Titratable acidity, lactic acid mg/ml | Lactic acid bacteria | Coliforms | Yeasts and moulds |
|---|---|---|---|---|---|
| | | | | Number of colonies cfu/ml | |
| Control | 3.46 | 5.92 | $1.4 \times 10^7$ | 85 and 0 | $2.6 \times 10^4$ and <10 |
| Starter | 3.37 | 6.77 | $0.8 \times 10^7$ | 0 | < 10 |

According to the results, the starter addition increased lactic acid production and prevented growth of coliformic enterobacteria, as well as yeasts and moulds. Both the control and the starter cucumbers were hollow, but the starter cucumbers were not as flattened, and their taste was better. Lactic acid bacteria grown on an MRS plate were rods in each of the samples (10 colonies per sample).

**Chemical and microbiological analysis, and sensory evaluation of the fermented cucumbers**

In the sensory evaluation test cucumbers prepared with the freeze-dried starter according to this invention (Ferme starter strain mixture: *Lc. mesenteroides* 78*, P. pentosaceus* P45 and *L. paraplantarum* 2*) were compared to control cucumbers of the same producer and to cucumbers of two different producers prepared with the same freeze-dried starter. The preservation of the cucumbers is described above in item 3. The producers were given instructions to add 10 g of each of the strains to 100 ml of brine, i. e. the starter was added altogether in an amount of 30 g. Hence the starter level of $10^7$ cfu/ml of brine was obtained.

For chemical and microbiological determinations samples were taken of the brine. The microbiological determinations were carried out on the sampling .day. For the chemical determinations the brines were frozen at -20°C, were taken to thaw in a cold store at 5°C and analysed after two days.

The sensory evaluation was carried out in the sensory evaluation laboratory of MTT, and for tasters the staff of EKT was recruited, altogether 23 persons. The evaluations were carried out during forenoon. There were 6 cucumbers to taste. The fermented cucumbers were flushed with tap water and sliced with a slicing machine to slices of about 2 mm thick. The cucumbers were evaluated in random order according to their code numbers. In the evaluation form the pleasantness of the cucumbers was inquired, but there was no request to compare the cucumbers with each other. The reviewers marked a line on the scale to the point, which best corresponded to their liking. The length of the segment of the line was measured and used as the evaluation result, the tolerance of which was 0-90 mm.

**Results**

*1. Microbiological results*

The hygienic quality of the cucumbers was good (Table 14). Only one sample included yeasts and moulds.

Table 14. Microbiological results of the brines of the cucumbers reviewed.

| Sample | Number of colonies cfu/ml | | |
|---|---|---|---|
| | Lactic acid bacteria | Coliforms | Yeasts and moulds |
| Sample 1 (Producer 1) | $5.9 \times 10^5$ | 0 | <10 |
| Sample 2 (Producer 1) | $2.9 \times 10^6$ | 0 | <10 |
| Sample 3 (Producer 2) | $2.7 \times 10^7$ | 0 | Moulds 100, Yeasts 620 |
| Control (Producer 3) | $2.8 \times 10^7$ | 0 | <10 |
| Sample 4 (Producer 3) | $2.7 \times 10^6$ | 0 | <10 |

Microsopy of MRS plates:

Samples 1 and 2: All colonies looked similar. From both of the samples two colonies were microscoped, all of which were rods.
Sample 3: The colonies showed full of variety. 11 colonies were microscoped, 9 of which were rods and 2 of which were pediococci.

Sample 4: All colonies (2 colonies/sample) were rods. The colonies looked similar to those of control cucumbers.
Control: 4 colonies of the control cucumbers were microscoped, all of which were rods.

*2. Chemical results*

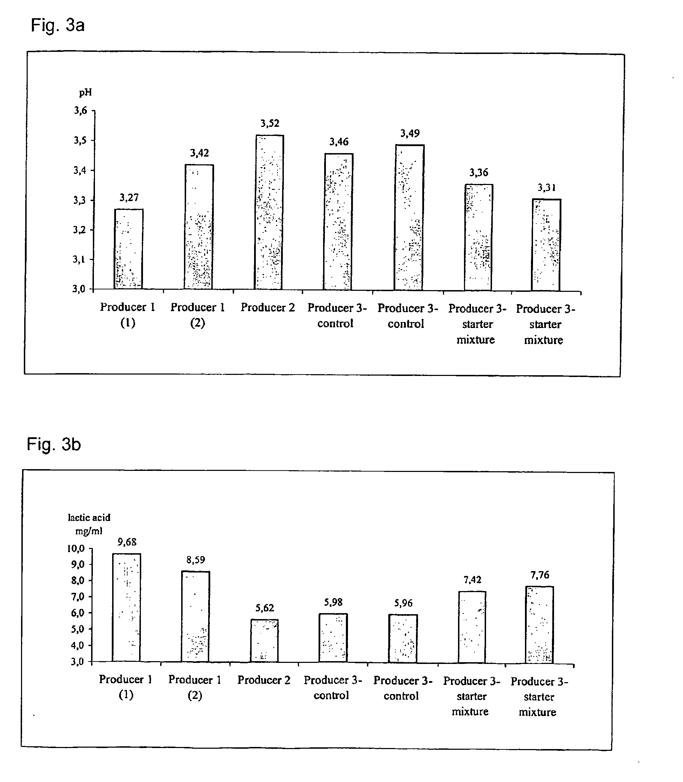

pH, titratable acidity and salt concentration was measured of the cucumber brines. The salt concentration and the titratable acidity were highest in the cucumbers of Producer 1, and lowest in the cucumbers of Producer 2. Of the cucumbers of Producer 3, the cucumbers made with starter had lower pH and higher titratable acidity than the control cucumbers (Figures 3a and 3b). The salt determination showed that salt had been divided evenly to the cucumbers, and the calculatory salt concentration was the same as the result of the titration.

*3. Sensory evaluation*

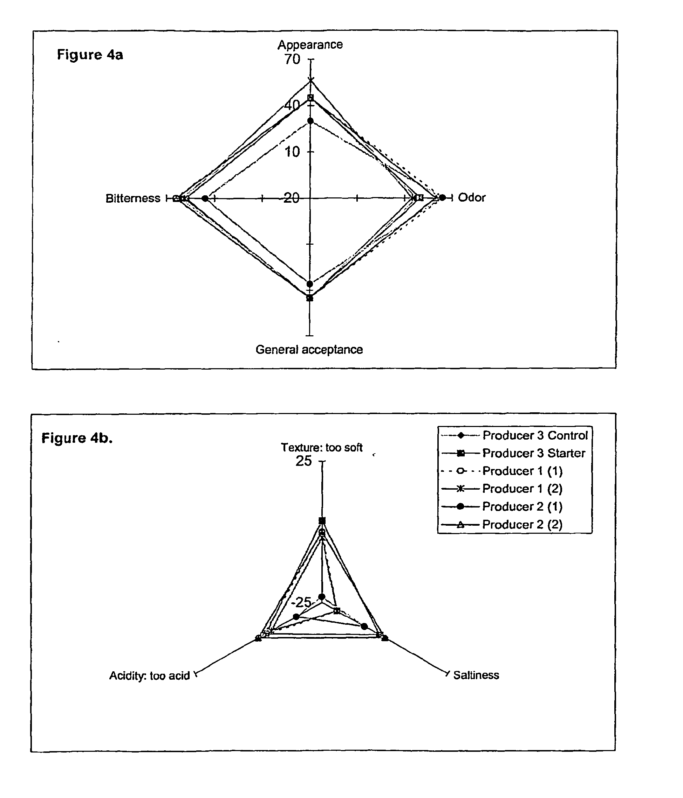

The results of the sensory evaluation are collected to Figures 4a and 4b, which show medians of the markings given. The target result of appearance, odor, bitterness and general acceptance was 90, whereas as regards texture, saltiness and acidity the target result was in the middle of the foregoing, 45.
The differences between the medians were calculated with SAS-Npair 1 Way program, using the unidirectional non-parametric variance analysis of Kruskall-Wallis. Pairwise comparisons were carried out using variance analysis, and the Wilcoxon Two-Sample test.

**Summary of the sensory evaluation**

The cucumbers prepared with the Ferme starter strain mixture were in the practical production experiments found out to be of good quality. The way of preparation, seasoning and salt concentration had effect on the evaluation markings of the cucumbers. The cucumbers of Producer 2 had been fermented for a fairly long time, and their salt concentration was low. This may have caused the excessive softening of the texture. The cucumbers of Producer 1 were evaluated to have best characteristics, although the cucumbers were considered a little two salty. The cucumbers of Producer 3 had no spices, which caused the fact that the cucumbers obtained comments on taste of feed, and stuffyness. The fermented cucumbers of Producer 3 did not differ statistically from the control.

**Deposited microorganisms**

The following microorganisms were deposited according to the Budapest Treaty at the DSMZ depositary (Deutsche Sammlung von Mikroorganismen und Zellkulturen, GmbH, Mascheroder Weg 1b, D-38124 Braunschweig, Germany)

| Microorganism | Deposit number | Deposition date |
|---|---|---|
| *Lactobacillus* sp. 2* | DSM 14485 | 31 August 2001 |
| *Leuconostoc* sp. 78 | DSM 14486 | 31 August 2001 |
| *Pediococcus* sp. 9/PX3 | DSM 14487 | 31 August 2001 |
| *Pediococcus* sp. P45 | DSM 14488 | 31 August 2001 |

**References**

Eriksson, C. (1991) Lactic acid bacteria and vegetable, cereal, meat and fish fermentations. *J. Chem. Tech. Nat. Biotechn.* 51:553-556.
Gardner, N.J., Savard, T., Obermeier, P., Caldwell, G. and Champagne, C.P. (2001) Selection and characterization of mixed starter cultures for lactic acid fermentation of carrot, cabbage, beet and onion vegetable mixtures. *International J. of Food Microbiology* 64:261-275.
Gorbach (1990) Lactic acid bacteria and human health. *Ann. Med.* 22:37-41.
McFeeters, R. F. (1993) Nutritional changes in food prosessing: fermentation. Proceedings of the XII International Congress of Nutrition, Brighton, UK, 1993
Ouwehand, A.C. and Conway, P.L. (1996) Purification and characterization of a component produced by *Lactobacillus fermentum* that inhibits the adhesion of K88 expressing *Escherichia coli* to porcine ileal mucus. *J. Appl. Bacteriol.* 80:311-318.
Ouwehand, A.C., Kirjavainen, P.V., Grönlund, M.-M., Isolauri, E. and Salminen, S.J. (1999) Adhesion of probiotic micro-organisms to intestinal mucus. *International Dairy Journal* 9:623-630.

Purtsi, T., Kilpi, M., Viander, B., Korhonen H. and Ryhänen E.-L. (1999) Fermentation of cucumber: optimizing process technology for design of healthier foods. *Functional Foods,* (proceedings) 14.-15.4.1999 Wye College, UK,

Ryhänen, E-L., Tolonen, M. and Taipale, M. (2001) Glukosinolaatit ja niiden hajoamistuotteet elintarvikkeissa. In: Kasviperäiset biomolekyylit - glukosinolaatit (Ed. Hyvärinen, H.). Publications of MTT Agrifood Research Finland, Ser. A 90, pp 58-67.

Sanders, M.E. (1998) Overview of functional foods: Emphasis on probiotic bacteria. *International Dairy Journal,* 8:341-347.

Savard, T., Champagne, C.P. and Beaulieu, C. (2000) Influence des proportions de *Leuconostoc mesenteroides* dans l'inoculum sur la fermentation d'un mélange de legumes à base de carottes. *Sciences des Aliments,* 20:603-610.

Sillanpää, M-L. (1984) Hapankaalin valmistus ja säilytys kotona. Työtehoseuran kotitaloustiedotus 14/1984

Torriani, S., Felis, G. E. and Dellaglio, F. (2001) Differentiation of *Lactobacillus plantarum, L. pentosus,* and *L. paraplantarum* by *recA* Gene Sequence Analysis and Multiplex PCR Assay with *recA* Gene-Derived Primers. *Applied and Environmental Microbiology,* Aug., 2001, p. 3450-3454.

Tuomola, E.M. and Salminen, S.J. (1998) Adhesion of some probiotic and dairy *Lactobacillus* strains to Caco-2 cell cultures *Int. J. Food Microbiol.* 41:45 -51.

de Valdez, G.F., de Giori, G.S., Garro, M., Mozzi, F. and Oliver, G. (1990) Lactic acid bacteria from naturally fermented vegetables. *Microbiologie - Aliments - Nutrition* 8:175-179.

Ziemer, C.J., and Gibson, G.R. (1998). An overview of probiotics, prebiotics and synbiotics in the functional food concept: perspectives and future strategies. *International Dairy Journal,* 8:473-479.

**Claims**

1. A pure culture of the bacterial strain *Lactobacillus* sp. 2* (DSM 14485).

2. Use of a pure culture of the bacterial strain *Lactobacillus* sp. 2* (DSM 14485) in a starter adapted for use in fermentation of plant material.

3. Use according to claim 2, wherein the starter comprises the bacterial strains *Pediococcus pentosaceus* P45 (DSM 14488) and *Leuconostoc mesenteroides* 78 (DSM 14486).

4. A process for the fermentation of plant material, **characterized in that** the plant material to be fermented is contacted with a starter mixture including the bacterial strain *Lactobacillus* sp. 2* (DSM 14485), and fermented anaerobically or microaerophilically until achieving a desired acid concentration.

5. The process according to claim 4, wherein the starter mixture comprises the bacterial strains *Pediococcus pentosaceus* P45 (DSM 14488) and *Leuconostoc mesenteroides* 78 (DSM 14486).

**Patentansprüche**

1. Reinkultur des Bakterienstamms *Lactobacillus* sp.2* (DSM 14485).

2. Verwendung einer Reinkultur des Bakterienstamms *Lactobacillus* sp.2* (DSM 14485) in einem Starter, der angepasst ist zur Verwendung bei der Fermentation von Pflanzenmaterial.

3. Verwendung nach Anspruch 2, wobei der Starter die Bakterienstämme *Pediococcus pentosaceus* P45 (DSM 14488) und *Leuconostoc mesenteroides* 78 (DSM 14486) umfasst.

4. Verfahren zur Fermentation von Pflanzenmaterial, **dadurch gekennzeichnet, dass** das zu fermentierende Pflanzenmaterial in Kontakt gebracht wird mit einer Startermischung, die den Bakterienstamm *Lactobacillus* sp.2* (DSM 14485) beinhaltet, und anaerob oder microaerophil fermentiert wird, bis die gewünschte Säurekonzentration erreicht ist.

5. Verfahren nach Anspruch 4, wobei die Startermischung die Bakterienstämme *Pediococcus pentosaceus* P45 (DSM 14488) und *Leuconostoc mesenteroides* 78 (DSM 14486) umfasst.

**Revendications**

1. Culture pure de la souche bactérienne *Lactobacillus* sp. 2* (DSM 14485).

2. Utilisation d'une culture pure de la souche bactérienne *Lactobacillus* sp. 2* (DSM 14485) dans un amorceur adapté à l'utilisation dans la fermentation de végétaux.

3. Utilisation selon la revendication 2, dans laquelle l'amorceur comprend les souches bactériennes *Pediococcus pentosaceus* P45 (DSM 14488) et *Leuconostoc mesenteroides* 78 (DSM 14486).

4. Procédé de fermentation de végétaux, **caractérisé en ce que** le végétal à fermenter est mis en contact avec un mélange amorceur contenant la souche bactérienne *Lactobacillus* sp. 2* (DSM 14485), et est fermenté en condition anaérobie ou microaérophile jusqu'à obtention de la concentration acide souhaitée.

5. Procédé selon la revendication 4, dans lequel le mélange amorceur comprend les souches bactériennes *Pediococcus pentosaceus* P45 (DSM 14488) et *Leuconostoc mesenteroides* 78 (DSM 14486).

Fig. 1a

**Tolerance of bile and pancreatic juice**

log cfu/ml

10,00

8,00

6,00

4,00

2,00

0,00

*L. paraplantarum 2\**

*Lc. mesenteroides 78*

□ Control
□ Bile acids
□ pancreatic juice

0      0,5      3            0      0,5      3

time (h)

Fig. 1b

**Acid tolerance**

log cfu/ml

10,00

8,00

6,00

4,00

2,00

0,00

*L. paraplantarum 2\**

*Lc. mesenteroides 78*

□ pH 7
□ pH 4
□ pH 2

0      0,5      3            0      0,5      3

time (h)

Fig. 2a

Fig. 2b

Fig. 3a

Fig. 3b

Figure 4a

Figure 4b.